# EUROPEAN PATENT SPECIFICATION

(11) **EP 2 115 314 B1**
(45) Date of publication and mention of the grant of the patent: **11.04.2012**
(21) Application number: 07859225.0
(22) Date of filing: 24.12.2007
(51) Int. Cl.: F16D 65/14, F16D 65/00, F16D 55/00

(54) **PLUG FOR BRAKE CALIPER**
STOPFEN FÜR BREMSSATTEL
BOUCHON POUR ÉTRIER DE FREIN

(30) Priority: 31.01.2007 IT FI20070019
(43) Date of publication of application: 11.11.2009
(73) Proprietor: Formula S.r.l., 59100 Prato (IT)
(72) Inventor: DI PIETRO, Gabriele, I-51100 Pistoia (IT); VEZZOLI, Giancarlo, I-25049 Brescia (IT)
(74) Representative: Nesti, Antonio
(86) International application number: PCT/IB2007/004158
(87) International publication number: WO 2008/093162

(56) References cited:
- AU-B2- 416 990
- DE-A1-102004 040 422
- JP-A- 5 302 633

## Description

### Technical Field of the invention

The present invention relates to a caliper for brakes that can be applied to members moving relative to each other.

In particular, the present invention relates to a caliper for disc brakes, for example for bicycles and motorcycles.

### Background Art

As it is known, the disc brake comprises a disc solid to the wheel of the vehicle and a brake caliper mounted, by means of suitable supports, to a part of the same vehicle. The caliper is provided with one or more small pistons which close up onto the disc to exert the braking action by means of either a pedal-operated pump mounted close to one of the footboard of the motorcycle, or a lever disposed on the handlebar of same motorcycle.

In particular, the small pistons are in contact with the respective pads, which are the components actually exerting the braking action on the disc.

The pads are usually made from sintered, organic or combined materials (semimetallic, carbon, ceramic...) having high friction capacity and being resistant to high temperatures.

After the release of the brake control by the user, the small pistons and, thus, the pads, return approximately to the initial position, due also to the action exerted by an elastic means interposed therebetween.

It is a growing trend to produce calipers for disc brakes in one-piece component.

This embodiment allows achieving a greater structural resistance of the whole braking system, but gives however problems relative to the accessibility necessary for assembling the components and, in general, when carrying out the machining operations inside the body of the same caliper (seats of pistons and gaskets, hydraulic channels...).

To overcome this drawback it results therefore crucial to form at least a hole for access into the containment body of the brake caliper.

Said hole must then be hermetically sealed by a plug.

In the known brake calipers, this plug is applied on the caliper body, usually in alignment with the axis of the pistons and fixed, for example, by means of threaded elements on the containment body, thereby requiring added material with consequent increase of the caliper's overall dimensions.

The known calipers for brakes are not therefore without drawbacks.

A first drawback lies in the fact that in the known calipers, the presence of the plug needs the said added material to form a housing for the same plug, such provision giving rise to an asymmetry of the caliper that may generate braking forces not perfectly balanced between the piston acting in the caliper portion which includes the plug, and the piston acting in the opposite portion.

A second drawback, again caused by the presence of added material provided for housing the plug, is given by the fact that a caliper having such added material can be mounted on the vehicle only on a single part of the wheel. In particular, the caliper must be mounted on the vehicle so that the added material will face the outside of the wheel in order not to interfere, for example, with the spokes of the wheel of a bicycle or motorcycle.

A known caliper for disk brakes is described in DE -A-102004040422, showing a piston guided into the caliper for pressing of a brake pad against a brake disc.

In this known caliper, the piston slides on a pivot formed in the caliper and extending into an internal through hole centrically arranged in the piston.

### Disclosure of the Invention

The object of the present invention is to provide a for brakes positional reference for the gasket disposed in the housing seat inside the cavity, the piston tight-seal sliding on said gasket.

The technical characteristics of the invention, according to the above objects, are clearly set forth in the appended claims, the advantages of the same invention being more evident from the detailed description that follows with reference to the accompanying drawings, which show an exemplary and non-limiting embodiment thereof. In the drawings:
- Fig. 1 is a first section view of a brake caliper according to the present invention;

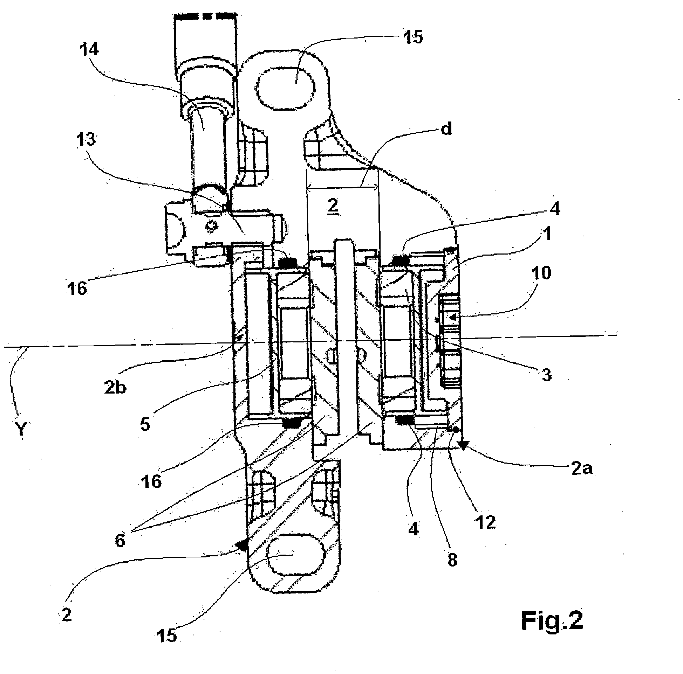

- Fig. 2 is a second section view of a brake caliper according to the present invention;
- Fig. 3 is a side view of brake caliper shown in the previous figures;
- Fig. 4 shows in detail a preferred embodiment of a plug used in a brake caliper according to the present invention; and
- Fig. 5 shows in detail a possible type of piston used in a brake caliper according to the present invention. Described herebelow, according to the accompanying drawings and reference being made in particular to Figs. 1 to 3, is a brake caliper comprising a one-piece containment body 2 having an external surface and being substantially symmetrical to a plane "X".

The containment body 2 comprises, on a first portion 2a, a cavity 20 allowing access to the inner regions of the brake caliper to ease the assembly upon production (for example of pistons 3, 5) and any service operation to be carried out also after the assembly of the caliper on the vehicle or a generic member to be slowed down and/or stopped.

More precisely, the containment body 2 results substantially symmetrical to the plane "X" save for the supports 15.

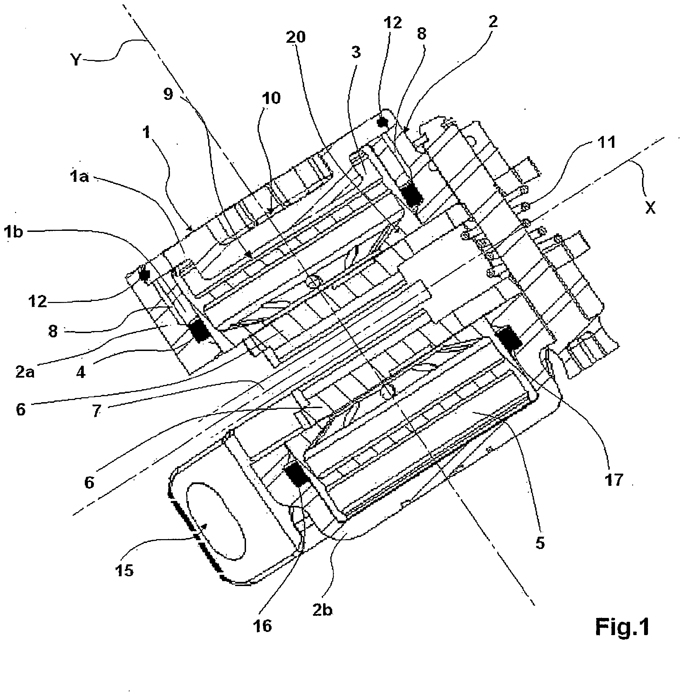

In particular, the containment body 2 exhibits two opposite portions 2a, 2b with equal overall dimensions along the direction "Y" and comprising the same components (pistons 3, 5, gaskets 4, 16), except for a plug 1 included only in the first portion 2a in order to seal tightly a cavity 20 housing the piston 3, as shown in Fig. 1.

The plug 1 has an external surface 1c and can be fixed in the cavity 20 to close it off.

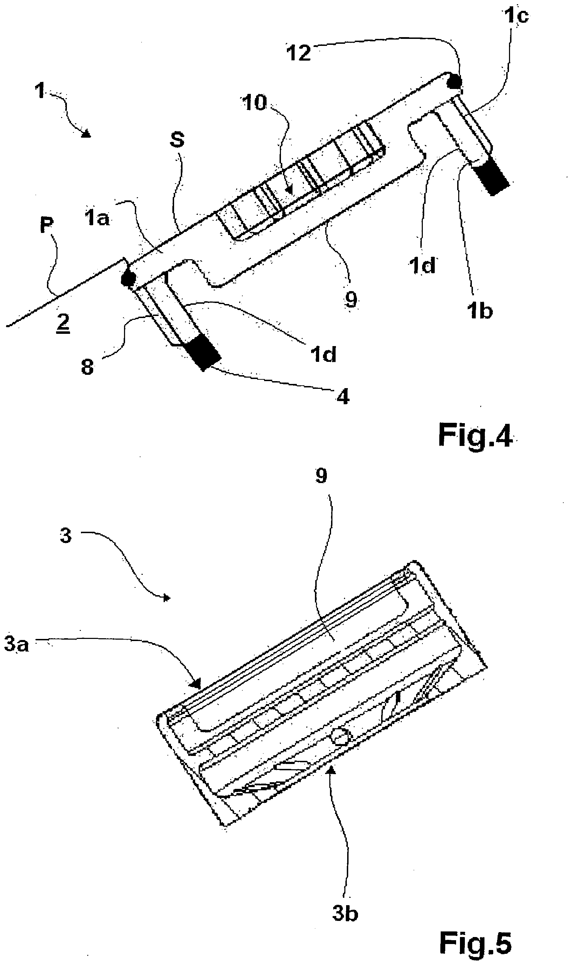

Advantageously, the tight sealing of the cavity 20 is made by fixing the plug 1, the latter being screwed into a threaded hole 8 formed directly in the containment body 2 (as shown in Fig. 5).

Under a closing condition of cavity 20, the external surface 1c of plug 1 remains fully within the overall dimensions defined by the external surface of the containment body 2.

More precisely, with reference to Fig. 4, the upper surface "S" of plug 1 results flush with, or at a level below the upper surface "P" of the first portion 2a of containment body 2.

The second portion 2b of containment body 2 is in fluid communication with the first portion 2a and comprises a cavity 17 in which a second piston 5 is disposed for acting along the same axis "Y" of piston 3 but in opposite direction.

The second piston 5 slides inside the cavity 17 and in contact with a sealing gasket 16 disposed in a seat formed on the same containment body 2.

The first piston 3 and the second piston 5 are associated with respective pads 6 (of known type) which transmits the friction force onto a disc 7 (of known type) solid to the wheel and interposed between said pads.

Preferably, a brake caliper according to present invention also comprises at least one gasket 4 disposed in a seat inside the cavity 20 so that, when the plug 1 is screwed into the containment body 2, a first end 1b will result into abutment on the same gasket 4, that is, will provide a positional reference for the gasket 4.

Upon the assembly, preferably prior to the positioning of the plug 1 for the closing of cavity 20, the piston 3 is disposed inside the same cavity 20 for operatively sliding at least partially inside the plug 1 and in contact with the gasket 4 or close thereto.

The assembly and service operations are made easier by the fact that the distance "d" between the pistons 4 and 5 is such as to allow the exit of one of the two pistons without removing the plug 1.

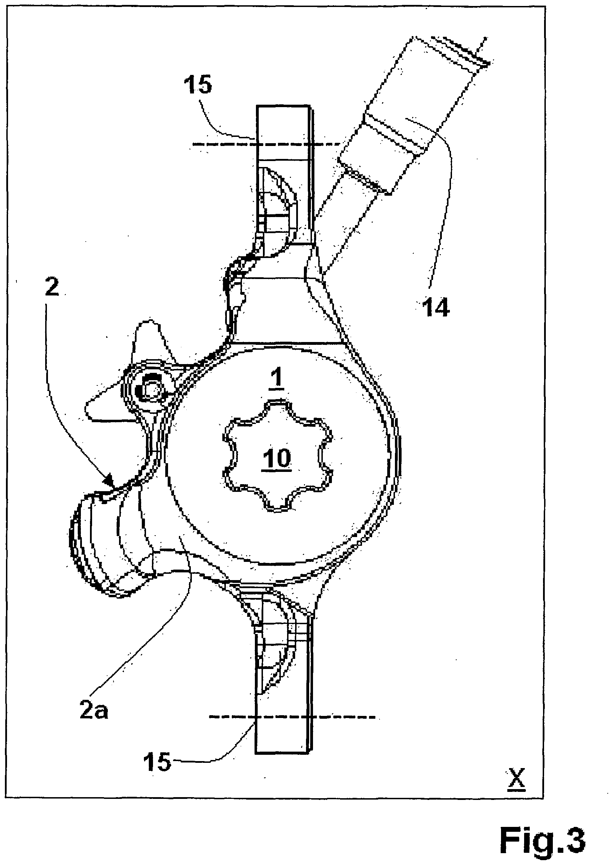

In particular, the piston 3 slides directly onto the inner surface 1d of the plug 1, the latter carrying out therefore the function of cylinder for the piston 3. Described hereunder, with reference in particular to Fig. 4, is a preferred embodiment of the plug 1 which comprises on its upper end 1a a concave surface 10 allowing the formation of the seat for inserting a tool to be used for the screwing/unscrewing of the same plug 1 (also shown in Fig. 3), said concave surface being substantially counter shaped to a convex surface 9 formed on the upper end 3a of piston 3.

In this embodiment, the plug 1 also comprises on its end 1a one or more sealing gaskets 12 which allow maintaining a tight-seal condition of the cavity 20 and making more difficult the spontaneous unscrewing of same plug.

This solution makes it possible to obtain a reduction of the overall dimensions and weights of the caliper, which is most important for example in the bicycle and motorcycle field.

The brake caliper also comprises supports 15 for fixing the same brake caliper on the vehicle or on any member to be slowed down and/or stopped, for example threaded connections, or through slots, of a type known per se and therefore not to be described in greater detail.

The brake caliper is connected with a user-operable brake control (for example a footboard or a lever) by means of at least one connection conduit 13, 14 holding a fluid. In operation, when the two cavities 17, 20 result filled with fluid introduced by the connectors 13, 14, the actuation of the brake control member by the user generates an almost simultaneous increase of hydraulic pressure, on the external ends (with respect to axis "X") of the two pistons 3 and 5 in the first 2a and second 2b portion of the containment body 2, so as to generate at least one motion component along the axis "Y".

The movement of pistons 3 and 5 close to each other puts the pads 6, associated therewith, in contact with the brake disc 7, thereby generating a braking force necessary for slowing down and/or stopping the vehicle.

The moment the user releases the brake control, the pistons 3 and 5, and respective pads 6, move back to the initial position, thereby facilitating the detachment of the brake disc 7 through the action of an elastic means 11 (in the illustrated example being a spiral spring) interposed between the pads 6.

The above achieves important advantages.

A first advantage lies in the fact that a brake caliper according to the present invention allows disposing the plug 1, which is capable of tightly sealing the cavity 20, fully within the internal dimensions of same cavity 20, thereby achieving a caliper without added material and thus symmetric to the plane "X", and of less overall dimensions with respect to the known brake calipers. The obtainment of symmetric caliper brings about also significant advantages both in terms of balance of braking forces and possibility of assembling the caliper with the portion 2a of containment body 2 (that is, the portion comprising the plug 1) either on the inner or on the outer side of the vehicle's wheel.

The invention thus conceived is evidently suited for industrial application; the same invention can also be subjected to several modifications and changes falling within the scope of the claims.

## Claims

1. Caliper for brakes comprising: a containment body (2) having a cavity (20), a plug (1) provided with means for fixedly closing-off said cavity (20), and having an end (1b), at least a gasket (4) disposed in a housing seat formed inside said cavity (20), a piston (3) tight-seal sliding on said gasket (4), **characterized in that**, under closing condition, said end (1b) of said plug (1) is into abutment with said gasket (4).

2. Caliper for brakes according to claim 1, wherein the plug (1) has an internal surface (1d), the piston (3) disposed for sliding within said cavity (20) at least partially along said internal surface (1d) of said plug (1).

3. Caliper according to any of the preceding claims wherein said plug comprises on the upper end (1a) a concave surface (10).

4. Caliper according to any of the preceding claims wherein said piston (3) comprises on the upper end (3a) a convex surface (9).

5. Caliper according to claim 4 wherein said convex surface (9) of said piston (3) is counter shaped to said concave surface (10) of said plug (1).

6. Caliper according to any of the preceding claims wherein said containment body (2), in proximity of said cavity (20), comprises a threaded portion (8) for fixing said plug (1) inside said cavity (20).

7. Caliper according to any of the preceding claims wherein said containment body (2) is one-piece component.

8. Caliper according to any of the preceding claims further comprising at least one support (15) for fixing said caliper on a structure.

9. Caliper according to any of the preceding claims wherein said containment body (2) comprises a second portion (2b) in which a second piston (5) is disposed.

10. Caliper according to claim 9 wherein said second portion (2b) is in fluid connection with said first portion (2a) of said containment body (2).

11. Caliper according to any of the preceding claims further comprising at least one conduit (13), (14) for connection with a brake-controlling member.

12. Caliper according to any of the preceding claims wherein said pistons (3), (5) comprise at least one sealing gasket.

13. Caliper according to any of the preceding claims wherein said pistons (3), (5) exert a thrust onto said brake disc (7) through at least one motion component along the axis (Y) with opposite directions via respective pads (6).

14. Caliper for brakes according to any of the preceding claims wherein the one-piece containment body (2) has an external surface (P), said containment body (2) being substantially symmetrical to a plane (X) and having the cavity (20) for housing a plug (1) inside a first portion (2a) under the closing condition of said cavity (20) the external surface (S) of said plug (1) remains fully within the overall dimensions defined by the external surface (P) of said containment body (2).

15. Vehicle comprising a caliper for brakes according to any of the preceding claims, said vehicle being a bicycle o a motorcycle.

## Patentansprüche

1. Bremssattel für Bremsen, umfassend: einen Umschließungskörper (2) mit einem Hohlraum (20), einer Verschlusskappe (1), die mit einer Einrichtung zum festen Verschließen des Hohlraums (20) versehen ist und ein Ende (1b) aufweist, zumindest einer Dichtung (4), die in einem im Inneren des Hohlraums (20) ausgebildeten Gehäusesitz angeordnet ist, einem auf der Dichtung (4) fest abdichtend gleitenden Kolben (3), **dadurch gekennzeichnet, dass** sich das Ende (1b) der Verschlusskappe (1) während eines Schließzustandes mit der Dichtung (4) in Anlage befindet.

2. Bremssattel für Bremsen nach Anspruch 1, bei dem die Verschlusskappe (1) eine innere Fläche (1d) aufweist, der Kolben (3) innerhalb des Hohlraums (20) zumindest teilweise entlang der inneren Fläche (1d) der Verschlusskappe (1) gleitend angeordnet ist.

3. Bremssattel nach einem der vorhergehenden Ansprüche, bei dem die Verschlusskappe an dem oberen Ende (1a) eine konkave Fläche (10) aufweist.

4. Bremssattel nach einem der vorhergehenden Ansprüche, bei dem der Kolben (3) an dem oberen Ende (3a) eine konvexe Fläche (9) aufweist.

5. Bremssattel nach Anspruch 4, bei dem die konvexe Fläche (9) des Kolbens (3) entgegen gesetzt zu der konkaven Fläche (10) der Verschlusskappe (1) geformt ist.

6. Bremssattel nach einem der vorhergehenden Ansprüche, bei dem der Umschließungskörper (2) in räumlicher Nähe des Hohlraums (20) einen mit Gewinde versehenen Abschnitt (8) zum Befestigen der Verschlusskappe (1) im Inneren des Hohlraums (20) aufweist.

7. Bremssattel nach einem der vorhergehenden Ansprüche, bei dem der Umschließungskörper (2) ein einteiliges Bauteil ist.

8. Bremssattel nach einem der vorhergehenden Ansprüche, des Weiteren umfassend zumindest eine Halterung (15) zum Befestigen des Bremssattels an einem Aufbau.

9. Bremssattel nach einem der vorhergehenden Ansprüche, bei dem der Umschließungskörper (2) einen zweiten Abschnitt (2b) aufweist, in dem ein zweiter Kolben (5) angeordnet ist.

10. Bremssattel nach Anspruch 9, bei dem sich der zweite Abschnitt (2b) mit dem ersten Abschnitt (2a) des Umschließungskörpers (2) in Fluidverbindung befindet.

11. Bremssattel nach einem der vorhergehenden Ansprüche, des Weiteren umfassend zumindest eine Leitung (13), (14) zur Verbindung mit dem Bremssteuerelement.

12. Bremssattel nach einem der vorhergehenden Ansprüche, bei dem die Kolben (3), (5) zumindest ein Dichtungsprofil aufweisen.

13. Bremssattel nach einem der vorhergehenden Ansprüche, bei dem die Kolben (3), (5) durch zumindest ein Bewegungsbauteil entlang der Achse (Y) mit entgegen gesetzten Richtungen über jeweilige Bremsklötze (6) einen Druck auf die Bremsscheibe (7) ausüben.

14. Bremssattel für Bremsen nach einem der vorhergehenden Ansprüche, bei dem der einsteilige Umschließungskörper (2) eine äußere Fläche (P) aufweist, der Umschließungskörper (2) im Wesentlichen symmetrisch zu einer Ebene (X) ist und den Hohlraum (20) zur Aufnahme einer Verschlusskappe (1) im Inneren eines ersten Abschnitts (2a) aufweist und während des Schließzustandes des Hohlraums (20) die äußere Fläche (S) der Verschlusskappe (1) innerhalb der durch die äußere Fläche (P) des Umschließungskörpers (2) definierten Gesamtabmessungen mit etwas Übermaß bestehen bleibt.

15. Fahrzeug mit einem Bremssattel für Bremsen nach einem der vorhergehenden Ansprüche, wobei das Fahrzeug ein Fahrrad oder ein Motorrad ist.

## Revendications

1. Etrier pour freins comprenant : un corps de confinement (2) ayant une cavité (20), un bouchon (1) pourvu d'un moyen permettant de fermer fixement ladite cavité (20), et ayant une extrémité (1b), au moins un joint d'étanchéité (4) disposé dans une assise de logement formée à l'intérieur de ladite cavité (20), un piston (3) glissant de manière étanche sur ledit joint d'étanchéité (4), **caractérisé en ce que**, dans une condition de fermeture, ladite extrémité (1b) dudit bouchon (1) est en butée avec ledit joint d'étanchéité (4).

2. Etrier pour freins selon la revendication 1, dans lequel le bouchon (1) a une surface interne (1d), le piston (3) étant disposé pour glisser dans ladite cavité (20) au moins partiellement le long de ladite surface interne (1d) dudit bouchon (1).

3. Etrier selon l'une quelconque des revendications précédentes, dans lequel ledit bouchon comprend sur l'extrémité supérieure (1a) une surface concave (10).

4. Etrier selon l'une quelconque des revendications précédentes, dans lequel ledit piston (3) comprend sur l'extrémité supérieure (3a) une surface convexe (9).

5. Etrier selon la revendication 4, dans lequel ladite surface convexe (9) dudit piston (3) est en contre-forme avec ladite surface concave (10) dudit bouchon (1).

6. Etrier selon l'une quelconque des revendications précédentes, dans lequel ledit corps de confinement (2), à proximité de ladite cavité (20), comprend une portion filetée (8) permettant de fixer ledit bouchon (1) à l'intérieur de ladite cavité (20).

7. Etrier selon l'une quelconque des revendications précédentes, dans lequel ledit corps de confinement (2) est un composant d'un seul tenant.

8. Etrier selon l'une quelconque des revendications précédentes, comprenant en outre au moins un support (15) permettant de fixer ledit étrier sur une structure.

9. Etrier selon l'une quelconque des revendications précédentes, dans lequel ledit corps de confinement (2) comprend une seconde portion (2b) dans laquelle un second piston (5) est disposé.

10. Etrier selon la revendication 9, dans lequel ladite seconde portion (2b) est en raccordement fluidique avec ladite première portion (2a) dudit corps de confinement (2).

11. Etrier selon l'une quelconque des revendications précédentes, comprenant en outre au moins un conduit (13, 14) pour raccordement avec un organe de commande de frein.

12. Etrier selon l'une quelconque des revendications précédentes, dans lequel lesdits pistons (3), (5) comprennent au moins un joint d'étanchéité.

13. Etrier selon l'une quelconque des revendications précédentes, dans lequel lesdits pistons (3), (5) exercent une poussée sur ledit disque de frein (7) par l'intermédiaire d'au moins une composante de mouvement le long de l'axe (Y) avec des sens opposés via des plaquettes (6) respectives.

14. Etrier pour freins selon l'une quelconque des revendications précédentes, dans lequel le corps de confinement d'un seul tenant (2) a une surface externe (P), ledit corps de confinement (2) étant sensiblement symétrique à un plan (X) et ayant la cavité (20) pour loger un bouchon (1) à l'intérieur d'une première portion (2a), dans la condition de fermeture de ladite cavité (20), la surface externe (S) dudit bouchon (1) reste pleinement dans les dimensions globales définies par la surface externe (P) dudit corps de confinement (2).

15. Véhicule comprenant un étrier pour freins selon l'une quelconque des revendications précédentes, ledit véhicule étant une bicyclette ou un motocycle.
